# EUROPEAN PATENT APPLICATION

(11) **EP 2 351 974 A1**
(43) Date of publication of application: **03.08.2011**
(21) Application number: 09820289.8
(22) Date of filing: 24.09.2009
(51) Int. Cl.: F24H 3/00, F24D 13/00, F24C 7/00, H05B 3/00

(54) **HEAT EMISSION APPARATUS**

(30) Priority: 13.10.2008 ES 200802067 U
(71) Applicant: Servicios Integrales de Climatización y Confort, S.L., 33930 La Felguera (Asturias) (ES)
(72) Inventor: FERNANDEZ GARCIA, Isaac, Asturias (ES); GARCIA GARCIA, Marcos, Asturias (ES)
(74) Representative: Garcia-Cabrerizo y del Santo, Pedro Maria
(86) International application number: PCT/ES2009/000468
(87) International publication number: WO 2010/043731

(57) **Abstract**

Heat emission apparatus based on electrical energy for the generation of heat by means of the Joule effect, comprising a modular body (2), with a plurality of individual finned modules (3) passed through by an electric resistance (4) engaged in openings without grooves or intermediate air gaps; a front glass panel (5) concealing the modules (3) in the manner of an aesthetic closure which favours heat transmission by means of convection; at the top and bottom, aluminum frames (7) having the function of fixing the panel (5), incorporating a guide (8) in which it is engaged and fixed, and being provided with grooves (9) for circulation of the air; and lateral frames (10) acting as a closure for the assembly and stops for preventing contact with the hot surfaces of the modular body (2) or disassembly of the panel (5), one of which housing the electrical and electronic control and safety systems for managing the apparatus.

## Description

### OBJECT OF THE INVENTION

The invention, as expressed in the statement of the present specification, relates to a heat emission apparatus, that contributes to the function it is intended for, with several advantages and innovative features, apart from others inherent to its organization, which will be described in detail below, which represent a remarkable improvement over what is already known on the market in this field.

More particularly, the object of the invention focuses on a heat emission apparatus, or electric heater, wherein, based on electrical energy for the generation of heat by means of the Joule effect and combining the different existing technologies, design and efficiency join in an innovative way, further providing new applications that improve its performance.

Thus, the invention comprises a modular body of aluminum elements combined with a front glass panel, which can also be heated or not, said assembly being coupled to some perimeter frames that fix it providing it with a compact and aesthetically attractive design, the sides also serving to house the electrical and electronic control systems.

### FIELD OF APPLICATION OF THE INVENTION

The field of application of the present invention is within the industrial sector dedicated to the manufacture of electric heaters and heat emitters.

### BACKGROUND OF THE INVENTION

Currently, and as a reference to the state of the art, it should be noted that although many types of radiators and electric heat emitters are known, the applicant is not aware of any that presents technical, structural or configuration characteristics similar to those presented by the one recommended here.

In this regard, it should be noted that apparatus and devices made from metal modules, preferably aluminum, electrically heated by different systems and equipped with electronic elements to control their operation are known. On the other hand, electrical apparatus and devices designed to emit heat from glass panels, ceramic plates or similar are also known.

However, both systems have certain disadvantages and aspects that can be improved, such as an excessive consumption and/or a waste of the produced energy, not knowing the existence on the market of an apparatus that combines both, such as the one suggested here, and the essential objective of which is to combine the efficiency of said systems and avoid some of its drawbacks.

### EXPLANATION OF THE INVENTION

Thus, the heat emission apparatus suggested by the present invention is configured by itself as a remarkable novelty in its field of application, since, according to its creation, attaining the above-mentioned objectives considered as appropriate is achieved in an exhaustive manner, the characterizing details that make this possible being appropriately reflected in the final claims accompanying the present specification.

Namely, the heat emission apparatus recommended comprises the following elements:
A modular body, which is the main body of the heater and is formed by extruded aluminum modules or individual elements, with a finned shape to increase the surface in contact with air, while on the inside they are traversed by two cylindrical openings with an appropriate size to tightly house an electrical resistance.

Is important to note that the aforementioned openings will have the minimum size possible to allow said housing so that the resistance is engaged in the modules without any slots or intermediate air gaps, thus achieving the heat generated by the same to quickly and effectively pass to the aluminum body with maximum performance, since the contact between both objects is optimal.

The elements thus assembled, are joined together by embedding them by means of the adapted fins, and inserting between them two screws (one at the bottom and one at the top), which will be appropriately sized so that the attachment between elements is solid and forms compact blocks provided with great firmness.

Preferably, the described modular body shall consist of an even number of modules or individual elements in order to split the power applied to it in two so that the elements located at an even position can be operated separately from those located at an odd position, to make them work together or individually, and, being interspersed, to take advantage of the thermal inertia of the aluminum body when going from full power to half and vice versa.

Proceeding with the invention, it is noteworthy that the apparatus comprises also a front tempered glass panel, which is located at the front and concealing the aluminum elements described above from the front view. Said panel has two main functions:
On the one hand, it serves as a aesthetic closure to the heater assembly, since the color of it can be selected, thus avoiding the view of said aluminum elements, while improving the transmission of heat to the atmosphere by means of convection, since it "stops" the heat from the aluminum body received by radiation and reflects it in an upward direction.

On the other hand, the panel gives extra support to the device heating power, since it can optionally be heated by itself incorporating thermal material wires (the kind used in the lunettes of the vehicles for misting). Enhancing the heat transmission of the assembly is achieved by this effect. The heat generated by it, is transmitted horizontally to the environment, mainly through heat radiation, which favors the thermal suitability of the assembly.

Moreover, the recommended apparatus has, at the top and bottom, some frames made of, same as the modular elements of the main body, extruded aluminum, which are custom-made to the rest of the assembly and having as a mission three different functions:
To serve as upper and lower fixing to the glass panel, since they include a track where said panel is embedded and by means of which is perfectly fixed.

Also they prevent the possible slight loss of linearity between the aluminum modular elements forming the main body, always keeping them perfectly parallel on all its areas to the glass panel and thus assuring its straightness.

At the same time, said frames function as safety locks, both above and below, to prevent accidental contact with extremely hot surfaces (above and below), and parts under electric tension (bottom).

The aforementioned frames are equipped, likewise, with the appropriate grooves to allow air circulation through the heating body by the natural convection method, the warmer air entering by the bottom and the hottest going out by the top.

In parallel, the device has, laterally, two frames made of plastic, a flame retardant material, to which a multiple function is also assigned:
Serving as a side aesthetic closure of the assembly, since together with the shape of the aforementioned top and bottom frames maintain a common aesthetic line; serving as side stops to prevent both accidental contact with hot surfaces, and the disassembly of the front glass panel, avoiding its left-right side-scrolling; and one of them, preferably the one on the right, for housing the electrical and electronic control and safety systems for managing the apparatus.

It is, therefore, verified that the apparatus described has a number of advantages over other electric heating systems, among which are the following:
The heat generated by the electrical resistances allows harnessing said heat energy and distribute it within a uniform metal block. This allows that the energy generated do not cause, in the metal part in contact with the environment, very high temperatures, as in other systems (< 300°C), in a relatively small area, causing unpleasant hot streams, and burning the air and particles around; on the contrary, which are achieved are relatively low temperatures, spread over an area large enough for the dissipation to be more uniform, smooth and fast.

Another advantage is the fact of having individual elements, allowing to be connected separately, leaving the option to the electronic control system to manage the power applied, either alternately or at 100%, considering that the resistances that are left out of operation, when they have come to consume, will not have to "waste" time and energy heating their own steel body and the aluminum element they are in, but, being sandwiched between the other bodies, they start from an operating temperature, whereby from the moment they begin to consume, they are providing useful energy to the environment, resulting all in savings and efficiency.

Furthermore, it should be noted that the design of the aluminum elements is studied to increase contact surface with air, favoring the exchange of heat with the environment.

On the other hand, it is also advantageous to include a front glass panel, heat-treated to resist both thermal and mechanical shock, allowing to give an extra supply of heat by pure and soft radiation (with low power density per cm²), which given the nature of the human body, is perceived as a nice effect heat, causing a thermal sensation of comfort, achieved through a lower room temperature than that needed if the heat was only transmitted by means of convection.

Thus, the combination of glass and aluminum as active elements in the heating allows both materials to functionally, aesthetically and efficiently complement each other.

Finally, it is important to note that the recommended apparatus has an electronic management system PID (Proportional, Integral, Derivative) allowing optimizing its performance by featuring a room temperature sensor for rapid detection, the readings of which are interpreted by the microcontroller, and which gives order of coming into operation for the shortest possible time to achieve the target temperature marked by the user.

In addition, the PID technology system allows adjusting at any time the power consumption to the needs of the room, since it regulates the average power consumed by the apparatus according to the temperature difference between the environment and the one selected. Therefore, when a room temperature slightly lower than the one selected is achieved, it begins to modulate the power consumption, taking advantage of the heat that is still being generated by the thermal inertia of the aluminum modules, combined with the front panel.

The heat emission apparatus described therefore represents an innovative structure with structural and constitutive features previously unknown for this purpose, reasons that when linked to its practical usefulness, endow it with sufficient grounds for obtaining the privilege of exclusivity requested.

### DESCRIPTION OF THE DRAWINGS

To complement the description being made and in order to help to a better understanding of the features of the invention, is attached to this specification as an integral part thereof, a set of drawings, in which in an illustrative manner and not limiting, the following has been shown:
Figure number 1. Shows a view in which an exploded view of an example of embodiment of the heat emission apparatus object of the invention has been shown very schematically, showing in it the main parts and element that it has, as well as the configuration and arrangement thereof.
Figure number 2. Shows a perspective view of the assembled apparatus.

### PREFERRED EMBODIMENT OF THE INVENTION

In view of the aforementioned figures, and according to the numbering adopted, it can be seen in them a preferred embodiment of the invention, which comprises the parts and elements listed and described in detail below.

Thus, as shown in said figures, the invention consists of a heat emission apparatus (1) which essentially comprises the following elements:

A modular body (2), which is the main body of the heater and is formed, in turn, by a plurality of modules (3) or individual elements made of extruded aluminum, with a finned shape to increase the surface in contact with air, inside of which two cylindrical openings of appropriate size to tightly house an electrical resistance (4) traverse, which is engaged in them without any slots or intermediate air gaps.

Said modules (3) are assembled together by embedding them by the fins and inserting among them two screws (one at the bottom and one at the top not shown), so that the attachment between elements is solid and forms compact blocks provided with great firmness.

It is important to note that the resistances (4) of said modules (3) will be connected to operate in two separate groups but interspersed with each other, i.e. so that the modules (3) located at even position can be operated separately from those located at odd position to make them work together or individually, as appropriate.

The unit also features front tempered glass panel (5), which is located at the front of the modular body (2), concealing the aluminum modules (3) described above.

Said panel (5), in addition to aesthetic closure, favours the transfer of heat to the environment by means of convection, as it "stops" the heat from the aluminum modular body (2) received by radiation and reflects it in an upward direction.

On the other hand, and optionally, said panel (5) can be heated by itself by incorporating thermal material wires (6), which helps enhancing the heat transfer of the assembly.

On the other hand, the heat emission apparatus (1) has, at the top and bottom, some frames (7) made of extruded aluminum, as well as the modules (3), and which serve as upper and lower fixing to the glass panel (5), since they include one track or guide (8) where said panel is embedded and by means of which is fixed.

These top and bottom frames (7) also prevent the possible slight loss of linearity between the aluminum modules (3), always keeping them perfectly parallel to the glass panel (5) to assure their straightness and consequently the performance of the apparatus.

At the same time, the frames (7) serve as safety locks, both above and below, to prevent accidental contact with extremely hot surfaces (above and below), and parts under electric tension (bottom), being equipped with the appropriate grooves (9) to allow air circulation through the modular body (2).

On the other hand, the apparatus (1) includes two lateral frames (10) made of plastic, a flame retardant material, which serve as a side aesthetic closure of the assembly, as well as side stops to prevent both accidental contact with hot surfaces of the modular body (2), and the disassembly of the front glass panel (5), avoiding its lateral displacement.

One of said lateral frames (10), preferably the one on the right, also has the mission of housing the electrical and electronic control and safety systems of the apparatus, and it should be noted that said system is optionally of the type of PID technology, which allows optimizing its operation, having, in addition to the corresponding microcontroller and a display (11) to display the various parameters and allow scrolling through the different menus that enable its programming, a room temperature sensor for rapid detection (12), whose readings are interpreted by the microcontroller, and which gives the order of coming into operation for the shortest possible time to achieve the target temperature marked by the user.

Having been sufficiently described the nature of the present invention, as well as how to implement it, is not considered necessary to extend the explanation for any skilled in the art to understand its scope and the benefits that derive from it, stating that, within its essentiality, it would be put into practice in other embodiments that differ in detail from that indicated by way of example, and which are also reached by the protection claimed, provided that its fundamental principle is not altered, changed or modified.

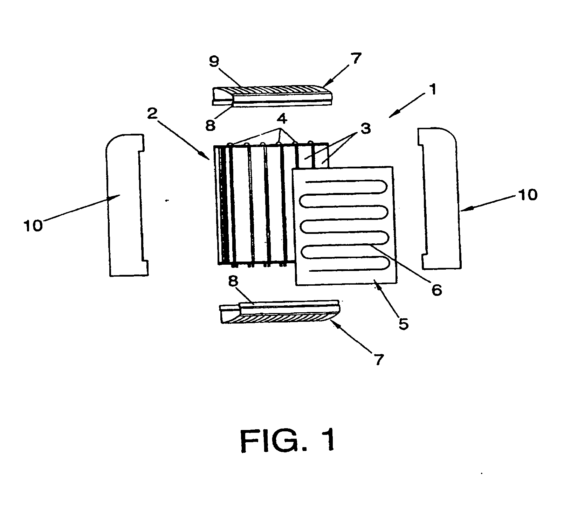

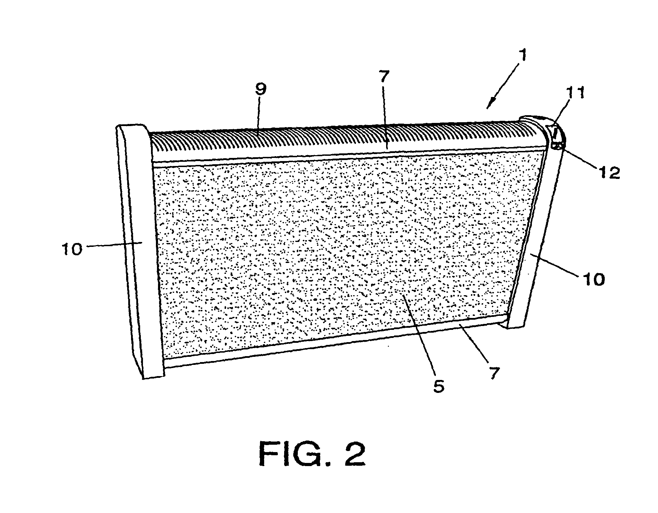

## Claims

1. HEAT EMISSION APPARATUS, based on electrical energy for the generation of heat by means of the Joule effect, **characterized in that** it comprises a modular body (2), consisting, in turn, of a plurality of modules (3) or individual elements, made of extruded aluminum, with finned shape, which inside are traversed by an electric resistance (4) engaged in openings provided for them without any slots or intermediate air gaps; a front tempered glass panel (5), located on the front of the modular body (2), concealing the aluminum modules (3) which, in addition to aesthetic closure, favours the transmission of heat to the environment by means of convection, as it "stops" the heat from the aluminum modular body (2) received by radiation and reflects it in an upward direction; at the top and bottom, two frames (7) made of extruded aluminum, which serve as upper and lower clamping for the glass panel (5), including a track or guide (8) where said panel is embedded and through which is fixed, and that are equipped with the appropriate grooves (9) to allow air circulation through the modular body (2); and two lateral frames (10) made of plastic, a flame retardant material, which serve as a side aesthetic closure of the assembly, as well as side stops to prevent both accidental contact with hot surfaces of the modular body (2), and the disassembly of the front glass panel (5), avoiding its lateral displacement, one of which housing the electrical and electronic control and safety systems for managing the apparatus.

2. HEAT EMISSION APPARATUS, according to claim 1, **characterized in that** the resistances (4) of the modules (3) are connected to function in two separate groups but interspersed with each other, i.e. so that the modules (3) located at even position can be operated separately from those located at odd position to make them work together or individually, as appropriate.

3. HEAT EMISSION APPARATUS, according to claims 1 and 2, **characterized in that** the modules (3) are joined together by embedding them by means of the fins, and inserting between them two screws (one at the bottom and one at the top), so that the attachment between elements is solid and forms compact blocks provided with great firmness.

4. HEAT EMISSION APPARATUS, according to claim 1, **characterized in that**, optionally, the glass panel (5) can be heated by itself by incorporating thermal material wires (6) in order to enhance heat transmission of the assembly.

5. HEAT EMISSION APPARATUS, according to claim 1, **characterized in that**, optionally, the control system is of the type of PID technology, having, in addition to the corresponding microcontroller and a display (11) to display the various parameters and allow scrolling through the different menus that enable its programming, a room temperature sensor for rapid detection (12).
